# EUROPEAN PATENT SPECIFICATION

(11) **EP 2 489 647 B1**
(45) Date of publication and mention of the grant of the patent: **08.08.2018**
(21) Application number: 12156232.6
(22) Date of filing: 20.02.2012
(51) Int. Cl.: C04B 28/04, E01C 7/14, E01C 11/22, C04B 18/02, C04B 20/10

(54) **ROAD PAVEMENTS BASED ON PORTLAND CEMENT**
STRASSENLAG AUF BASIS VON PORTLANDZEMENT
REVÊTEMENT ROUTIER À BASE DE CIMENT PORTLAND

(30) Priority: 21.02.2011 IT MI20110258
(43) Date of publication of application: 22.08.2012
(73) Proprietor: Betonrossi S.p.A., 29100 Piacenza (IT)
(72) Inventor: Sganzerla, Marco, 29100 Piacenza (IT); Rampini, Riccardo, 29100 Piacenza (IT)
(74) Representative: Monelli, Alberto

(56) References cited:
- EP-A1- 0 710 633
- EP-A1- 1 489 057
- WO-A2-2006/097272
- DE-A1- 1 646 640
- FR-A1- 2 613 356
- FR-A1- 2 858 614
- GB-A- 2 142 329
- GB-A- 191 110 839

## Description

The present invention relates to pervious cement concrete and sound-absorbing road pavements made of pervious cement concrete, a process for laying said pavements and the corresponding pervious cement concrete mixture. The invention mainly applies to the civil engineering field.

The invention is particularly useful for the construction of pavement layers for road infrastructures which comprise a stone matrix with a porous structure consisting of interconnected cavities, which gives the material characteristics of permeability, and also guarantees excellent resistance to static and dynamic loads.

### Background to the invention

The use of pervious materials is becoming increasingly widespread in various fields, especially civil engineering. The main reason is the need to find solutions that meet the increasing necessities to dispose of rainwater, which often requires compliance with environmental protection regulations to preserve the hydrogeological conditions of protected areas.

When new structures are built in protected areas they are required not to alter the hydrogeological balance, and the return of rainwater to the soil must be guaranteed. Great difficulties are encountered, for example, in building structures with a low environmental impact such as paved roads, parking lots, and cycle/pedestrian lanes.

Interlocking slabs are the solution most commonly used to meet these needs. However, this solution is particularly onerous in terms of both time and costs; moreover, the required surface evenness characteristics are not always compatible with drainability capacities.

If the structure is intended to withstand the passage of dynamic loads, the problem of low stability of the road surface also arises, as it may undergo local subsidence in time, with frequent displacement of the paving slabs.

Other applications requiring the use of highly permeable materials that withstand traffic stresses are infrastructures with a medium or high traffic volume such as roads and motorways, for which pervious asphalt mixes are normally used.

The advantages associated with the ease of laying pervious asphalt concrete are often outweighed by the high cost of the raw materials, especially of the bitumen and the fuels needed to lay the hot material, the costs of which depend on constantly increasing oil prices. There are also problems associated with fumes and laying temperatures, and their effects on the working conditions of the road workers.

In the case of double-layer draining/sound-absorbing pavements the costs increase even further, in terms of both laying and maintenance during the life cycle of the infrastructure.

Moreover, modern requirements associated with the need to reduce energy consumption are producing increasing demand for active heat mitigation measures that reduce heat absorption in hot climates and promote snow and ice melting in cold climates, both of which operations are possible with the use of specifically designed draining materials.

Concrete mixtures which comprise hydraulic cement, aggregates and acrylic admixtures, are known for various applications: a part from structural purposes, they can be used for example as decorative elements instead of natural stone, as aggregates for cement mixtures, for the stabilisation and decontamination of polluted soils (WO 2006/097272), and as coloured road surface coatings (DE 1646640). Uses in the construction of draining and sound-absorbing pervious cement concrete road pavements, laid with a road-paver machine, have never been disclosed to date, still less combined with a pervious asphalt concrete layer.

EP1489057A1 discloses a concrete material for paving comprises cement in specific amount and specific water to cement ratio, aggregate with high content of big aggregate, and glass yarn having continuous filament texture and resisting to alkali.

### Description of the invention

It has now been discovered that the disadvantages of the prior art can be eliminated by using a concrete mixture comprising Portland cement, aggregates and admixtures in quantities such as to obtain, when properly mixed with water, a material that possesses a workability such that it can be laid by a road-paver machine, and a consistency such as to preserve the shape given to it at the laying stage. Once laid, the material combines characteristics of mechanical strength and high drainage capacity.

The invention therefore relates to draining and sound-absorbing road pavements characterised in that it is made with a wearing course layer, and optionally also a binder layer, consisting of a draining pervious cement concrete mixture comprising silica or porphyry aggregates, Portland cement, 0.15-0.60% by weight of cement of non-sulphonated acrylic superplasticizer and optionally, pigments.

According to a further aspect, the invention also relates to a draining pervious cement concrete mixture comprising silica or porphyry aggregates, Portland cement, 0.15-0.60% by weight of cement of non-sulphonated acrylic superplasticizer and optionally, pigments, in particular for use in the preparation of wearing course layers and/or binder layers in road pavements.

The invention also relates to the process of preparation of said pavement which is essential to obtain the necessary characteristics of consistency, workability, resistance and drainability.

The pavement according to the invention presents the following advantageous properties:
- high capacity to drain water and/or other liquids, for the purpose of their collection, disposal and/or hydrogeological return to the soil;
- excellent performance in terms of load-bearing capacity and resistance to static and dynamic loads;
- ability to filter storm water and pollutant liquids, preventing them from flowing directly into channelling systems or the soil;
- reduced heat absorption and heat storage, due to the open matrix of material that allows air recirculation, and to the light colour of the mixture;
- faster melting of ice and snow, due to air recirculation and the permeability of the material, reducing both surface slipperiness and the need for removal of frozen material;
- high load-bearing capacity values in much shorter times than ordinary concretes, allowing the transit of construction site vehicles only 3 days after laying;
- lower unit weight than ordinary concretes;
- resistance to high temperatures and fire;
- resistance to spillage of oil-based liquids (which would damage asphalt concrete, even if it is draining);
- sound-absorbing capacity;
- functions of draining-layer designed to reduce the hydraulic height of the water table;
- lower visual impact in any colour context due to the possibility of pigmentation;
- excellent workability, allowing to be laid also with road-paving construction machinery;
- laying without contraction joints, thus reducing the cost of installation and ensuring a more regular surface and more comfortable driving.

The invention therefore solves a number of technical problems, thus allowing the simultaneous replacement of several types of products.

Examples of applications of the material according to the invention include:
- draining and/or sound-absorbing road pavements;
- pavements for cycle/pedestrian lanes, and parking lots;
- energy-saving anti-heat pavements and systems in hot areas with strong solar radiation and high ambient temperatures;
- pavements resistant to chemical attack caused by spillage of fuels and fuel oils.

### Detailed description of the invention

The draining pervious cement concrete mixture consists of stone aggregates, cement, superplasticizing admixtures, water and optionally, pigments.

The aggregates can preferably be silica or porphyry aggregates, but also limestone or basalt, and may be round or crushed, according to the field of use, with a particle size of not less than 4 millimetres and not more than 31.5 mm, preferably between 5 and 16 mm, and in any event not exceeding one-third of the thickness of the layer to be made.

The cement used in the mixture is preferably Portland class 42.5 R, used in the proportion of 280-330 kg/m³, depending on the required performance (mechanical strength or drainability).

The admixtures used in the mixture belong to the family of superplasticizer, based on new-generation non-sulphonated acrylic polymers, used in the proportion of 0.15-0.60% by weight of the cement, and in any event in quantities which give the mixture the consistency of semi-dry/moist mix (slump class S1/S2).

The total water in the mixture must be between 100 l/m³ and 140 l/m³ on average, and in any event in quantities which give the mixture the consistency of semi-dry/moist mix (slump class S1/S2) when a particular mixing process is used.

The pigments may be introduced into the mixture to give the pavement the desired colour, in proportions such as to produce the desired intensity of colour (average proportion: 2-6% of the weight of the cement). The pigmentation given to the material colours the entire thickness of the concrete mixture, not only the surface, and is consequently homogeneous and long-lasting.

The mixing sequence and mixing times of the materials that make up the mixture are different from those of ordinary cement concretes due to the different chemico-physical characteristics of the end product.

The distinguishing elements of the material include resistance to loads and drainage capacity, typically 30 to 40 l/m² per second or more, due to the high percentage of interconnected cavities.

As the two said characteristics influence one another reciprocally, the performance of the material can be varied by modifying the proportions of the constituents, and consequently their mixing process, according to requirements and the type of application.

If desired, a wearing course layer made of draining asphalt concrete can be overlaid on the draining road layer constituted by the material according to the invention. In that case, the pervious cement concrete mixture according to the invention can replace the base and binder layers (normally dense/non-pervious), giving the pavement dual characteristics of drainability and sound absorbance, together with lower deformability, higher resistance to loads and longer duration of the life-cycle of the pavement.

The draining cement concrete layer is cold-laid, at ambient temperatures which may be well below the lower limit for asphalt concretes. Cold paving eliminates the problem of environmental fumes and risks to workers' health, and also provides a considerable energy saving during the laying stages. The pavement is laid by conventional procedures and equipment, similar to those normally used in the construction of asphalt road pavements. Only three days after laying, the layer reaches resistance values sufficient to allow the road to be opened for traffic.

The average values of a practical example of application are set out below by way of illustration:

### Low-traffic road applications (Drainbeton "M")

### Aggregates

Round or crushed silica aggregates with a particle size of between 5 and 10 mm.

### Cement

Portland cement, class 32.5 R or 42.5 R, used in the proportion of 290-310 kg/m³.

### Admixtures

Superplasticizer based on new-generation non-sulphonated acrylic polymers, used in quantities which give the mixture the consistency of semi-dry/moist mix.

### Water

Mixture water sufficient to give the mixture the consistency of semi-dry/moist mix.

The annexed photograph reproduces a core sample extracted from pavement obtained with the material described in the example, overlaid on said pavement.

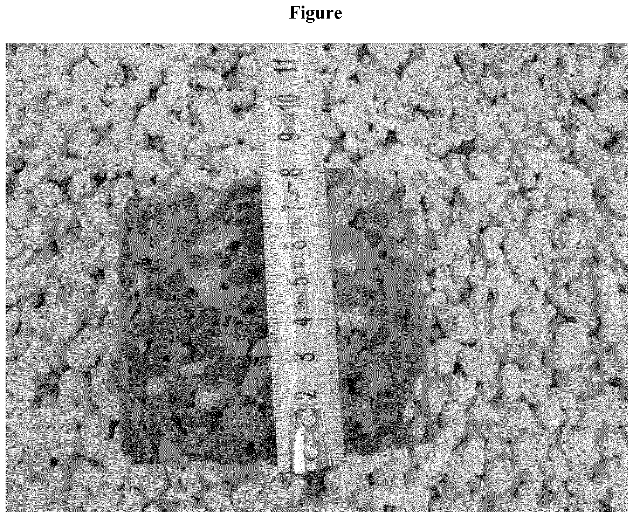

## Claims

1. Draining and sound-absorbing road pavement layers **characterised in that** the wearing course layer, and optionally also the binder layer, consist of a draining pervious cement concrete mixture consisting of silica or porphyry aggregates with a particle size of more than 4 mm and less than 31.5 mm, Portland cement in the proportion of between 280 and 330 kg per cubic metre of concrete, water, 0.15-0.60% by weight of cement of non-sulphonated acrylic superplasticizer and optionally pigments.

2. Pavement layer as claimed in claim 1, wherein the aggregates have a particle size of between 5 and 16 mm.

3. Pavement layer as claimed in any one or more of claims 1 and 2, wherein the pigments are present in quantities ranging between 2% and 6% by weight of cement.

4. Pavement layer as claimed in any one or more of claims 1 to 3, wherein the aggregates are crushed or rounded silica aggregates.

5. Process for the installation of draining and sound-absorbing pavement which comprises cold-laying of a layer of draining pervious cement concrete, which said concrete consists of silica or porphyry aggregates with a particle size of more than 4 mm and less than 31.5 mm, Portland cement in the proportion of between 280 and 330 kg per cubic metre of concrete, 0.15-0.60% by weight of cement of non-sulphonated acrylic superplasticizer, water and optionally, pigments.

## Patentansprüche

1. Entwässernde und schallabsorbierende Straßenbelagschichten, **dadurch gekennzeichnet, dass** die Deckschicht und gegebenenfalls auch die Binderschicht aus einer entwässernden durchlässigen Zementbetonmischung aus Siliciumdioxid oder Porphyr-Aggregaten mit einer Korngröße von mehr als 4 mm und weniger als 31,5 mm, Portlandzement im Verhältnis zwischen 280 und 330 kg pro Kubikmeter Zement, Wasser, 0,15 - 0,60 Gew.-% Zement aus nichtsulfoniertem Acryl-Fließmittel und gegebenenfalls Pigmenten bestehen.

2. Belagschicht nach Anspruch 1, wobei die Aggregate eine Korngröße zwischen 5 und 16 mm aufweisen.

3. Belagsschicht nach einem oder mehreren der Ansprüchen 1 und 2, wobei die Pigmente in Mengen zwischen 2 und 6 Gew.-% Zement vorliegen.

4. Belagschicht nach einem oder mehreren der Ansprüchen 1 bis 3, wobei die Aggregate gebrochene oder gerundete Siliciumdioxid-Aggregate sind.

5. Verfahren zum Einbau von entwässerndem und schallabsorbierendem Belag, umfassend das Kaltverlegen einer Schicht aus entwässerndem durchlässigem Zementbeton, der aus Siliciumdioxid oder Porphyr-Aggregaten mit einer Korngröße von mehr als 4 mm und weniger als 31,5 mm, Portlandzement im Verhältnis zwischen 280 und 330 kg pro Kubikmeter Beton, 0,15-0,60 Gew.-% Zement aus nichtsulfoniertem Acryl-Fließmittel, Wasser und gegebenenfalls Pigmenten besteht.

## Revendications

1. Couches de revêtement routier drainant et insonorisant **caractérisées en ce que** la couche d'usure et, facultativement aussi, la couche de liaison consistent en un mélange de béton de ciment perméable drainant consistant en des granulats de silice ou de porphyre ayant une dimension particulaire de plus de 4 mm et de moins de 31,5 mm, du ciment Portland dans une proportion comprise entre 280 et 330 kg par mètre cube de ciment, de l'eau, 0,15-0,60% en poids de ciment de superplastifiant acrylique non sulfoné et éventuellement des pigments.

2. Couche de revêtement selon la revendication 1, dans laquelle les granulats ont une dimension particulaire comprise entre 5 et 16 mm.

3. Couche de revêtement selon l'une quelconque ou plusieurs des revendications 1 et 2, dans laquelle les pigments sont présents dans des quantités comprises entre 2 et 6 % en poids de ciment.

4. Couche de revêtement selon l'une quelconque ou plusieurs des revendications 1 à 3, dans laquelle les granulats sont des granulats de silice concassés ou roulés.

5. Procédé destiné à l'installation d'un revêtement drainant et insonorisant comprenant la mise en oeuvre à froid d'une couche de béton de ciment perméable drainant, ledit ciment consistant en des granulats de silice ou de porphyre ayant une dimension particulaire de plus de 4 mm et de moins de 31,5 mm, du ciment Portland dans une proportion comprise entre 280 et 330 kg par mètre cube de ciment, 0,15-0,60% en poids de ciment de superplastifiant acrylique non sulfoné, de l'eau et éventuellement des pigments.
